# EUROPEAN PATENT SPECIFICATION

(11) **EP 3 623 299 B1**
(45) Date of publication and mention of the grant of the patent: **07.06.2023**
(21) Application number: 18382663.5
(22) Date of filing: 14.09.2018
(51) Int. Cl.: B64D 47/02, B60Q 1/00, B60Q 3/66, F21S 41/16

(54) **CENTRALIZED ARCHITECTURE FOR THE ILLUMINATION OF AN AIRCRAFT**
ZENTRALISIERTE ARCHITEKTUR FÜR DIE BELEUCHTUNG EINES FLUGZEUGS
ARCHITECTURE CENTRALISÉE POUR L'ÉCLAIRAGE D'UN AÉRONEF

(43) Date of publication of application: 18.03.2020
(73) Proprietor: Airbus Operations, S.L., 28906 Getafe (ES)
(72) Inventor: DE BROUWER, Gabrielle, 28906 Madrid (ES); ROBLEDO BUENO, Jesus, 28906 GETAFE (ES)

(56) References cited:
- EP-A1- 2 546 102
- EP-A1- 3 124 852
- WO-A1-2013/099144
- US-A- 5 690 408
- US-B1- 9 469 415
- Sama Hussein ET AL: "Novel Retroreflective Micro-Optical Structure for Automotive Lighting Applications", SAE International Journal of Passenger Cars - Mechanical Systems, 9 August 2017 (2017-08-09), pages 497-506, XP055569087, DOI: 10.4271/2016-01-1407 Retrieved from the Internet: URL:https://www.dgao-proceedings.de/downlo ad/118/118_p17.pdf [retrieved on 2019-03-13]

## Description

### Object of the invention

The present invention refers to a centralized architecture for the illumination of an aircraft, either for field illumination and external aircraft illumination. More particularly, the invention is relative to a centralized architecture based on laser technology and optic fiber.

One object of the invention is to provide an architecture for the illumination of an aircraft that simplifies the current installation of lights, and its integration in an aircraft structure.

Another object of the invention is to provide a more robust architecture for the illumination of an aircraft that improves the resistance of current architectures to external environment conditions.

Another object of the invention is to improve the illumination performances in terms of size, weight, and lighting power.

### Background of the invention

Currently, exterior lighting is mainly provided on aircrafts via halogen, HID (High Intensity Discharge) or LED (Light Emitting Diode) technology. The lights are typically installed on the fuselage, the wing, the nose landing gear, and the vertical tail plane for the purpose of aircraft signalisation, anti-collision function, ice detection function and field illumination.

This installation of lights in different parts of the aircraft brings quite a lot of complexity due to the environment constraint that the lights have to endure (temperature, vibration, humidity, lightning, hail...), leading to complex specific designs in order to reach the appropriate robustness.

For that, the structure of the aircraft needs to be adapted as well to the light installation, and be compatible with the thermal elevation brought by the light. Also, the structure has to meet its designed mechanical constraint together with sometimes heavy units to support (for example, one landing light can be up to 10kg).

Document WO2013099144 describes a vehicle lighting device provided with: a laser light source; a plurality of optical members for receiving the laser light, each of the optical members forming a predetermined light distribution pattern; a scan unit for scanning the laser light and distributing the laser light to each of the optical members; and a control unit for controlling the irradiation intensity of incident laser light for each of the optical members.

Document EP3124852 describes a lamp fitting for a vehicle including a plurality of laser light sources, and laser light from the plurality of laser light sources that it is introduced into a plurality of optical systems, and is used in the plurality of optical systems. The lamp fitting for a vehicle includes: a plurality of laser light sources; one or more optical fibers; one or more optical systems which are provided in conformity with the one or more optical fibers and to which a corresponding emission end of the optical fiber among the one or more optical fibers is connected; and a plurality of optical elements which are disposed between the laser light sources and an incident end of the one or more optical fibers, and constitute an optical path guiding laser light from at least one of the laser light sources to the incident end of the one or more optical fibers.

Document EP2546102 describes a reading light unit for a passenger service unit in an overhead panel above a number of passenger seats comprising: a reading light having a light source for emitting light to a passenger seat; an automatic adjustment arrangement, wherein it is further provided: a beam forming element for adjusting the light beam geometrical properties, and a light forming element for adjusting the light optical properties.

Document US5690408 describes a lighting system including a centralized light source, a plurality of light emitters, and a plurality of fiber optic lines extending between the light source and the light emitters for delivering light therebetween. More particularly, the invention includes a light source operably coupled to a concentrator for directing light generated by the light source towards an exit end of the concentrator. A fiber optic bundle is secured at its proximal end to the exit end of the concentrator for receiving the light generated by the light source therein. A plurality of sub-bundles diverge from the fiber optic bundle and transport the light from the light generator to a plurality of emitters. The emitters are disposed at various locations of desired illumination and emit the delivered light therefrom.

It would therefore be desirable to provide technical means that being able to withstand environment conditions, facilitate the installation and integration of lights in different parts of an aircraft.

### Summary of the invention

The present invention overcomes the above mentioned drawbacks by providing a centralized architecture for the illumination of an aircraft that is robust, and eases both the installation and integration of lights in different parts of the aircraft.

The present invention refers to a centralized architecture as specified in annexed claim 1.

This way, the invention provides an architecture where electronics destined for providing illumination to the aircraft (field illumination and external illumination) are centralized but separated from the optics, to thus provide a much more robustness than current architectures in which electronics are embedded in the optical part and both are exposed to the external environment. With the architecture of the invention, electronics may be embedded in a protected area of the aircraft, and the optics can be the only part exposed to the external environment.

With this architecture, the invention offers easier installation of exterior lights, and higher flexibility about the area of installation on the aircraft.

Further, since optical fibers allow very low loss in the transport of laser light (having an efficiency around 99.5% per meter), the proposed architecture is very efficient. Also, optical fibers are not affected by electromagnetic emissions, ensuring that no distortion or perturbation is to be feared due to the aircraft environment.

In addition, since laser lights have a lighting power much higher than current LED or HID options, the proposed architecture provides an improved illumination, specially better for far field illumination, typically used for landing or take-off.

Further, the overall weight of the illumination architecture is significantly lower than current solutions due to its simplified installation:
- no reinforcement is needed on the structure around the optical part since, for producing same quantity of light, laser technology requires less space than LED technology,
- power supply is centralized at laser generator level, while current architectures have one dedicated power supply for each light.

### Brief description of the drawings

For a better comprehension of the invention, the following drawings are provided for illustrative and non-limiting purposes, wherein:
Figure 1 shows a schematic view of a centralized architecture for the illumination of an aircraft, according to a preferred embodiment of the invention.
Figures 2 shows a perspective view of an aircraft having the centralized architecture for its illumination.

### Preferred embodiments of the invention

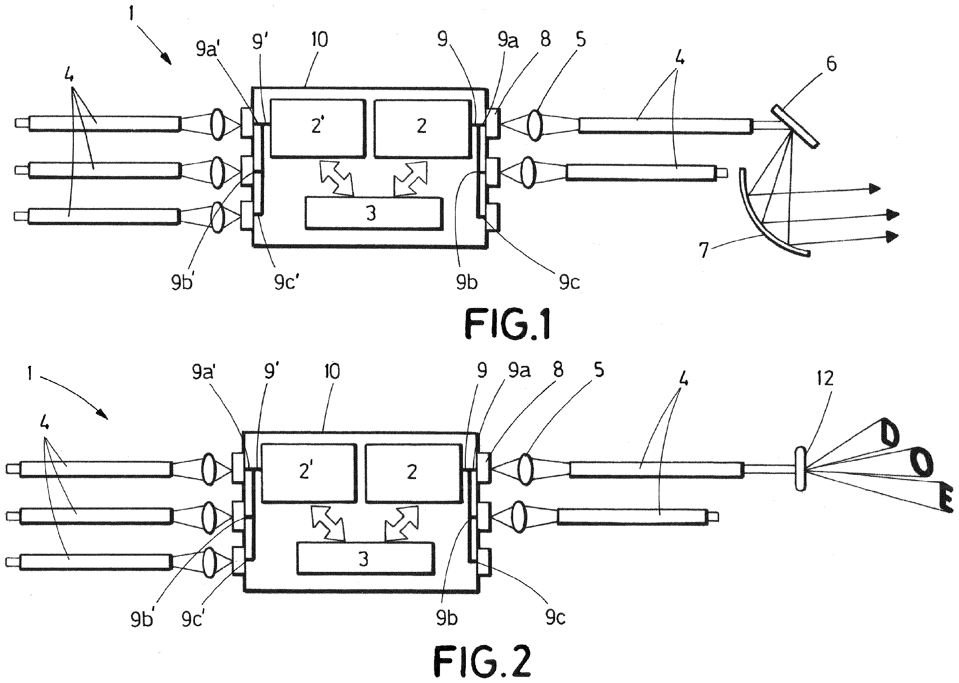

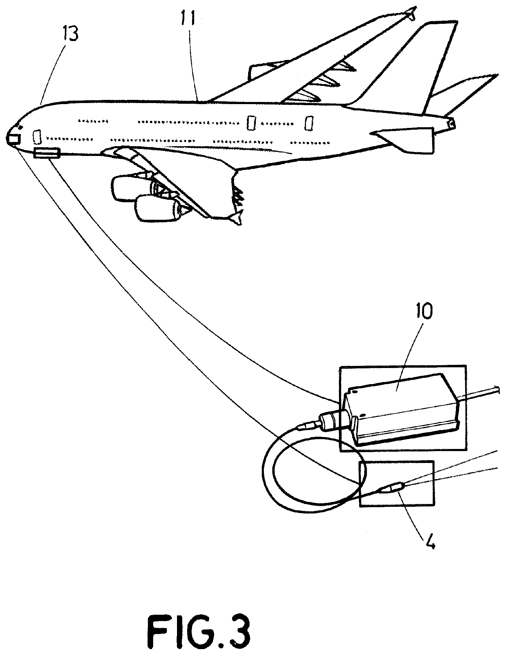

Figure 1 shows a centralized architecture (1) comprising two laser generators (2, 2') to ensure robustness of the function in case of failure of one of the sources, wherein each one is configured to emit a laser beam (9, 9') having a power of light, a control module (3) configured to distribute the full power of each laser beam (9, 9') into several partial power beams (9a, 9b, 9c; 9a', 9b', 9c'), and a cover (10) dimensioned to house the laser generators (2, 2') and the control module (3). This way, the electronic part is centralized under the cover (10).

Also, the architecture (1) comprises an optical part at least including a set of optical fibers (4).

As shown, the cover (10) comprises several outputs (8) for the passage of the partial power beams (9a, 9b, 9c; 9a', 9b', 9c'). Each one of the optical fibers (4) has an input facing one output (8) of the cover (10) to receive the light of one partial power beam (9a, 9b, 9c; 9a', 9b', 9c'), and an output disposed to illuminate a target area of an aircraft.

As shown, a lens (5) can be placed in the direction defined by each output of the cover (10) and the input of each optical fiber (4) to collimate the laser beams, specifically, the partial power beams (9a, 9b, 9c; 9a', 9b', 9c').

According to the invention, the control module (3) is also configured to switch on and switch off the power assigned to each one of the partial power beams (9a, 9b, 9c; 9a', 9b', 9c'). This way, the invention provides different illuminating functions to the aircraft (11).

As shown in Figure 1, the optical part of the architecture (1) further comprises a phosphor optical element (6) and a mirror (7). The phosphor optical element (6) is disposed to receive the light of the at least one partial power beam (9a, 9b, 9c; 9a', 9b', 9c') upon exiting the optical fiber output to provide a diffuse light to the target area. The mirror (7) is disposed to receive the light upon reflecting the phosphor optical element (6) to orient and shape the beam according to a desired illumination function.

The proposed architecture allows a separation between electronics and optics. Thus, electronics can be located in a protected area safe from the external environment conditions, and only the optics have to be exposed.

The replacement of all current lights by a centralized light source distributed by fiber optics greatly simplifies the installation of lights, the structure integration and even the illumination performances by opening new possibilities of light position on the aircraft.

According to a preferred embodiment, the control module (3) may be configured to vary the quantity of power assigned to form each one of the partial power beam (9a, 9b, 9c) to thus adapt the luminance provided by the architecture to different purposes.

According to another preferred embodiment, the at least one laser generator (2, 2') is a blue laser, and preferably a semi-polar orientation Gallium Nitride (GaN) laser.

According to another preferred embodiment, the centralized architecture (1) further comprises temperature regulating means housed in the cover (10) to maintain the air contained inside the cover (10) within a pre-established safe temperature range. This way, an efficient laser generation can be provided.

According to the invention, the centralized architecture (1) further comprises a light sensor placed at the output of the optical fiber (4) and adapted to bounce the light upon exiting the optical fiber (4) to be received by the control module (3), and wherein the control module (3) is further configured to detect a cut in an optical fiber (4) from an absence of light bounce to monitor the status of the optical fiber (4).

Preferably, the control module (3) is further configured to cancel the distribution of light assigned to one of the several partial power beams (9a, 9b, 9c) when a cut in the optical fiber (4) is detected by the control module (3), to thus ensure the safety of the eyes of the operators.

The centralized architecture (1) has to be installed in a controlled temperature and pressure compartment inside the aircraft, and preferably in a rack of an avionic bay. In this sense, the invention also refers to an aircraft (11) having an avionic bay and comprising the centralized architecture (1) as above described, wherein the cover (10) of said centralized architecture (1) is installed in the avionic bay.

According to a preferred embodiment, the aircraft has a nose section (13), and the cover (10) of the centralized architecture (1) is mounted on the nose section (13).

According to another preferred embodiment, the centralized architecture (1) comprises a phosphor optical element (6) or a diffractive optical element (12) installed in the skin of the aircraft (11).

Figure 2 schematically shows an aircraft (11) in which the cover (10) is mounted in the central part of its fuselage, and the output of one of the set of the optical fibers (4) reaches the nose section (13) to optimize the field illumination where there are no shades or restricted angles.

## Claims

1. - Centralized architecture (1) for the illumination of an aircraft (11), comprising:
- at least one laser generator (2) configured to emit a laser beam (9) having a power of light,
- a control module (3) configured to distribute the full power of the laser beam (9) into several partial power beams (9a, 9b, 9c) to provide different sources of light to the aircraft (11),
- a cover (10) dimensioned to house the at least one laser generator (2) and the control module (3), the cover (10) comprising several outputs (8) for the passage of the partial power beams (9a, 9b, 9c),
- a set of optical fibers (4), each optical fiber (4) having an input disposed to receive the light of one partial power beam (9a, 9b, 9c), and an output disposed to illuminate a target area,
- a phosphor optical element (6) disposed to receive the light of the at least one partial power beam (9a, 9b, 9c) upon exiting the optical fiber output to provide a diffuse light to the target area,
- a mirror (7) disposed to receive the light upon reflecting the phosphor optical element (6) to orient and shape the beam according to a desired illumination function,
- the control module (3) being also configured to switch on and switch off the power assigned to each one of the partial power beams (9a, 9b, 9c) to thus provide different illuminating functions to the aircraft (11),
**characterized in that** it further comprises a light sensor placed at the output of the optical fiber (4) and adapted to bounce the light upon exiting the optical fiber (4) to be received by the control module (3), and wherein the control module (3) is further configured to detect a cut in an optical fiber (4) from an absence of a light bounce to monitor the status of the optical fiber (4).

2. - Centralized architecture (1) for the illumination of an aircraft (11), according to any preceding claims, further comprising a redundant laser generator (2') configured to emit a second laser beam (9') having a power of light, wherein the control module (3) is further configured to distribute the full power of the second laser beam (9') into several partial power beams (9a', 9b', 9c') to provide different sources of light to the aircraft (11).

3. - Centralized architecture (1) for the illumination of an aircraft (11), according to any preceding claims, wherein the at least one laser generator (2, 2') is a blue laser, and preferably a semi-polar orientation Gallium Nitride (GaN) laser.

4. - Centralized architecture (1) for the illumination of an aircraft (11), according to any preceding claims, further comprising temperature regulating means, housed in the cover (10) to maintain the air contained inside the cover (10) within a pre-established safe temperature range.

5. - Centralized architecture (1) for the illumination of an aircraft (11), according to any preceding claim, wherein the control module (3) is further configured to cancel the distribution of light assigned to one of the several partial power beams (9a, 9b, 9c) when a cut in the optical fiber (4) is detected by the control module (3).

6. - An aircraft (11) having an avionic bay and comprising a centralized architecture (1) according to any of claims 1 to 5, wherein the cover (10) of the centralized architecture (1) is installed in the avionic bay.

7. - An aircraft (11), according to claim 6, wherein the aircraft has a nose section (13), and the cover (10) of the centralized architecture (1) is mounted on the nose section (13).

8. - An aircraft (11), according to any of claims 6-7, wherein the centralized architecture (1) comprises a phosphor optical element (6) installed in the skin of the aircraft (11).

## Patentansprüche

1. Zentralisierte Architektur (1) für die Beleuchtung eines Luftfahrzeugs (11), umfassend:
- mindestens einen Lasergenerator (2), der dafür ausgelegt ist, einen Laserstrahl (9) mit einer Lichtleistung zu emittieren,
- ein Steuermodul (3), das dafür ausgelegt ist, die volle Leistung des Laserstrahls (9) in mehrere Teilleistungsstrahlen (9a, 9b, 9c) zum Bereitstellen verschiedener Lichtquellen für das Luftfahrzeug (11) aufzuteilen,
- eine Abdeckung (10), die zum Aufnehmen des mindestens einen Lasergenerators (2) und des Steuermoduls (3) bemessen ist, wobei die Abdeckung (10) mehrere Ausgänge (8) für den Durchgang der Teilleistungsstrahlen (9a, 9b, 9c) umfasst,
- einen Satz Glasfasern (4), wobei jede Glasfaser (4) einen Eingang, der dazu eingerichtet ist, das Licht eines Teilleistungsstrahls (9a, 9b, 9c) zu empfangen, und einen Ausgang aufweist, der dazu eingerichtet ist, einen Zielbereich zu beleuchten,
- ein optisches Phosphorelement (6), das dazu eingerichtet ist, das Licht des mindestens einen Teilleistungsstrahls (9a, 9b, 9c) beim Verlassen des Ausgangs der Glasfaser zu empfangen, zu dem Zweck, ein diffuses Licht für den Zielbereich bereitzustellen,
- einen Spiegel (7), der dazu eingerichtet ist, das Licht nach dem Reflektieren am optischen Phosphorelement (6) zu empfangen, zu dem Zweck, den Strahl entsprechend einer gewünschten Beleuchtungsfunktion auszurichten und zu formen,
- wobei das Steuermodul (3) außerdem dafür ausgelegt ist, die jedem Teilleistungsstrahl (9a, 9b, 9c) zugewiesene Leistung ein- und auszuschalten, um so unterschiedliche Beleuchtungsfunktionen für das Luftfahrzeug (11) bereitzustellen,
**dadurch gekennzeichnet, dass** sie ferner einen Lichtsensor umfasst, der am Ausgang der Glasfaser (4) angeordnet ist und so eingerichtet ist, dass er das Licht beim Verlassen der Glasfaser (4) reflektiert, um vom Steuermodul (3) empfangen zu werden, und wobei das Steuermodul (3) ferner dafür ausgelegt ist, einen Bruch in einer Glasfaser (4) aus der Abwesenheit einer Lichtreflexion zu erfassen, zu dem Zweck, den Zustand der Glasfaser (4) zu überwachen.

2. Zentralisierte Architektur (1) für die Beleuchtung eines Luftfahrzeugs (11) nach einem der vorhergehenden Ansprüche, ferner umfassend einen redundanten Lasergenerator (2'), der dafür ausgelegt ist, einen zweiten Laserstrahl (9') mit einer Lichtleistung zu emittieren, wobei das Steuermodul (3) ferner dafür ausgelegt ist, die volle Leistung des zweiten Laserstrahls (9') auf mehrere Teilleistungsstrahlen (9a', 9b', 9c') zu verteilen, um für das Luftfahrzeug (11) verschiedene Lichtquellen bereitzustellen.

3. Zentralisierte Architektur (1) für die Beleuchtung eines Luftfahrzeugs (11) nach einem der vorhergehenden Ansprüche, wobei der mindestens eine Lasergenerator (2, 2') ein blauer Laser und vorzugsweise ein Galliumnitrid, GaN-, Laser mit semipolarer Orientierung ist.

4. Zentralisierte Architektur (1) für die Beleuchtung eines Luftfahrzeugs (11) nach einem der vorhergehenden Ansprüche, ferner umfassend Temperaturregulierungsmittel, die in der Abdeckung (10) untergebracht sind, zu dem Zweck, die in der Abdeckung (10) enthaltene Luft innerhalb eines vorher festgelegten sicheren Temperaturbereichs zu halten.

5. Zentralisierte Architektur (1) für die Beleuchtung eines Luftfahrzeugs (11) nach einem der vorhergehenden Ansprüche, wobei das Steuermodul (3) ferner dafür ausgelegt ist, die einem der mehreren Teilleistungsstrahlen (9a, 9b, 9c) zugewiesene Lichtverteilung aufzuheben, wenn durch das Steuermodul (3) ein Bruch in der Glasfaser (4) erfasst wird.

6. Luftfahrzeug (11), das eine Avionikbucht aufweist und eine zentralisierte Architektur (1) nach einem der Ansprüche 1 bis 5 umfasst, wobei die Abdeckung (10) der zentralisierten Architektur (1) in der Avionikbucht installiert ist.

7. Luftfahrzeug (11) nach Anspruch 6, wobei das Luftfahrzeug einen Bugabschnitt (13) aufweist und die Abdeckung (10) der zentralisierten Architektur (1) am Bugabschnitt (13) montiert ist.

8. Luftfahrzeug (11) nach einem der Ansprüche 6 bis 7, wobei die zentralisierte Architektur (1) ein optisches Phosphorelement (6) umfasst, das in der Außenhülle des Luftfahrzeugs (11) installiert ist.

## Revendications

1. Architecture centralisée (1) pour l'éclairage d'un aéronef (11), comprenant :
- au moins un générateur laser (2) configuré pour émettre un faisceau laser (9) ayant une puissance de lumière,
- un module de commande (3) configuré pour répartir la pleine puissance du faisceau laser (9) en plusieurs faisceaux de puissance partielle (9a, 9b, 9c) afin de fournir différentes sources de lumière à l'aéronef (11),
- un couvercle (10) dimensionné pour loger l'au moins un générateur laser (2) et le module de commande (3), le couvercle (10) comprenant plusieurs sorties (8) pour le passage des faisceaux de puissance partielle (9a, 9b, 9c),
- un ensemble de fibres optiques (4), chaque fibre optique (4) ayant une entrée disposée pour recevoir la lumière d'un faisceau de puissance partielle (9a, 9b, 9c), et une sortie disposée pour éclairer une zone cible,
- un élément optique au phosphore (6) disposé pour recevoir la lumière de l'au moins un faisceau de puissance partielle (9a, 9b, 9c) lorsqu'il quitte la sortie de la sortie de fibre optique pour fournir une lumière diffuse à la zone cible,
- un miroir (7) disposé pour recevoir la lumière réfléchie par l'élément optique au phosphore (6) pour orienter et former le faisceau selon une fonction d'éclairage souhaitée,
- le module de commande (3) étant également configuré pour allumer et éteindre la puissance attribuée à chacun des faisceaux de puissance partielle (9a, 9b, 9c) afin de fournir ainsi différentes fonctions d'éclairage à l'aéronef (11),
**caractérisée en ce qu'**elle comprend en outre un capteur de lumière placé à la sortie de la fibre optique (4) et conçu pour renvoyer la lumière lorsqu'elle quitte la fibre optique (4) pour être reçue par le module de commande (3), et le module de commande (3) étant en outre configuré pour détecter une coupure dans une fibre optique (4) à partir d'une absence d'un renvoi de lumière pour surveiller l'état de la fibre optique (4).

2. Architecture centralisée (1) pour l'éclairage d'un aéronef (11), selon l'une quelconque des revendications précédentes, comprenant en outre un générateur laser redondant (2') configuré pour émettre un deuxième faisceau laser (9') ayant une puissance de lumière, le module de commande (3) étant en outre configuré pour répartir la pleine puissance du deuxième faisceau laser (9') en plusieurs faisceaux de puissance partielle (9a', 9b', 9c') afin de fournir différentes sources de lumière à l'aéronef (11).

3. Architecture centralisée (1) pour l'éclairage d'un aéronef (11), selon l'une quelconque des revendications précédentes, dans laquelle l'au moins un générateur laser (2, 2') est un laser bleu, et préférablement un laser au nitrure de gallium (GaN) à orientation semipolaire.

4. Architecture centralisée (1) pour l'éclairage d'un aéronef (11), selon l'une quelconque des revendications précédentes, comprenant en outre des moyens de régulation de température, logés dans le couvercle (10) pour maintenir l'air contenu à l'intérieur du couvercle (10) dans une plage de température sûre préétablie.

5. Architecture centralisée (1) pour l'éclairage d'un aéronef (11), selon l'une quelconque des revendications précédentes, dans laquelle le module de commande (3) est en outre configuré pour annuler la répartition de lumière attribuée à l'un des plusieurs faisceaux de puissance partielle (9a, 9b, 9c) lorsqu'une coupure dans la fibre optique (4) est détectée par le module de commande (3).

6. Aéronef (11) ayant une baie avionique et comprenant une architecture centralisée (1) selon l'une quelconque des revendications 1 à 5, dans lequel le couvercle (10) de l'architecture centralisée (1) est installé dans la baie avionique.

7. Aéronef (11) selon la revendication 6, l'aéronef ayant une section de pointe avant (13), et dans lequel le couvercle (10) de l'architecture centralisée (1) est monté sur la section de pointe avant (13).

8. Aéronef (11), selon l'une quelconque des revendications 6 à 7, dans lequel l'architecture centralisée (1) comprend un élément optique au phosphore (6) installé dans le revêtement de l'aéronef (11) .
